# EUROPEAN PATENT APPLICATION

(11) **EP 2 814 146 A2**
(43) Date of publication of application: **17.12.2014**
(21) Application number: 14172210.8
(22) Date of filing: 12.06.2014
(51) Int. Cl.: H02K 21/04

(54) **Permanent magnet synchronous machines with magnetic flux regulation**

(30) Priority: 12.06.2013 US 201313916188
(71) Applicant: Hamilton Sundstrand Corporation, Charlotte, NC 28217 (US)
(72) Inventor: Rozman, Gregory I., Rockford, IL 61114 (US); Gieras, Jacek F., Glastonbury, CT 06033 (US)
(74) Representative: Hall, Matthew Benjamin

(57) **Abstract**

An electrical machine (100) has a permanent magnet component (10) and a winding armature (20). The permanent magnet component (10) is spaced apart for the winding armature (20). A field excitation winding is (18) operative connected to the permanent magnet component (10). The field excitation winding (18) is configured to selectively intensify and de-intensify the magnetic field of the permanent magnet component (10) for control of magnetic flux in the electrical machine (100).

## Description

The present invention relates to electrical machines, and more particularly to permanent magnet synchronous machines.

Synchronous machines can be used to rotate a prime mover to start the prime mover or can be rotated by a prime mover to generate electricity. Some synchronous machines, such as permanent magnet (PM) synchronous machines, can be configured for both rotating the prime mover while in a start-up mode and being rotated by the prime mover in a generate mode. Such permanent magnet synchronous machines typically have permanent magnets disposed on a rotor portion of the machine and AC armature windings disposed on a stator portion of the machine. In start-up mode, current is supplied to the stator windings to generate a magnetic field. The generated magnetic field pushes against a magnetic field of the rotor permanent magnets, thereby applying a torque to the rotor and rotating the prime mover. In generator mode, the prime mover rotates the rotor and the rotor permanent magnets pass the stator windings, thereby inducing a current flow in the AC windings. In both modes there is a need to regulate the strength of the magnetic field created by the permanent magnets.

One way of regulating the magnetic field flux created by the permanent magnets of a PM synchronous machines is through the use of external solid-state converters. External solid-state state converters can provide flux control over a limited range. Another way of regulating field flux is by incorporating direct current windings on the surfaces of either the rotor permanent magnets or stator windings. Additional surface DC windings provide a greater range of control, albeit at the cost of increasing the diameter and size of the PM synchronous machine.

Such conventional methods and systems of regulating PM synchronous machine magnetic fields have generally been considered satisfactory for their intended purpose. However, there is still a need in the art for a permanent magnet synchronous machine with improved magnetic flux excitation regulation. There is also a continuing need for smaller, more compact PM synchronous machines. And there remains a continuing need for PM synchronous machines that are easy to make and use. At least the preferred embodiments of the present invention provide a solution for these problems.

The subject invention is directed to a new and useful electrical machine with a permanent magnet component radially spaced apart from an armature winding and a field excitation winding magnetically coupled with the permanent magnet component. The field excitation winding is configured and arranged to selectively intensify and de-intensify the magnetic field of the permanent magnet component for control of magnetic flux in the electrical machine.

In certain embodiments the permanent magnet component defines pole shoe slots housing the field excitation winding. The permanent magnet component may be a rotor and the winding armature may be a stator separated from the rotor by a radial gap. The permanent magnet component can further define pole shoe slots housing the field excitation winding. It is further contemplated that the slots housing the field excitation winding can be proximate the radial gap.

In accordance with certain embodiments the rotor can be a rotor core arranged radially inward of the stator. The rotor can also include embedded permanent magnets. In certain embodiments the stator may be a three-phase stator with slots housing respective AC windings.

The invention also provides an electrical machine with a permanent magnet component including a plurality of magnetic poles each with a respective embedded permanent magnet, and a plurality of field excitation windings with respective windings housed in a respective pole shoe slot of the permanent magnet component.

In certain embodiments the field excitation windings are connected together in series. It is also contemplated that, in certain embodiments, the field excitation windings are connected together in parallel. In accordance with certain other embodiments, the permanent magnet component is a rotor and the armature winding is a stator. The rotor and stator are separated by a radial gap and the pole shoe slots housing the field excitation windings are proximate the radial gap. It is also contemplated that the rotor is a rotor core arranged radially inward of the stator. It is further contemplated that the stator is a three-phase stator with slots housing respective AC windings.

In one preferred embodiment, there is provided an electrical machine comprising: a permanent magnet component radially spaced apart from a winding armature, wherein the permanent magnet component includes a plurality of magnetic poles each with a respective embedded permanent magnet; and a plurality of field excitation windings, wherein a respective field excitation winding is housed in a respective pole shoe slot of the permanent magnet component to selectively intensify and de-intensify a magnetic field of the permanent magnets for control of magnetic flux in the electrical machine.

These and other features of the systems and methods of the subject invention will become more readily apparent to those skilled in the art from the following detailed description of the preferred embodiments taken in conjunction with the drawings.

So that those skilled in the art to which the subject invention appertains will readily understand how to make and use the devices and methods of the subject invention without undue experimentation, preferred embodiments thereof will be described in detail herein below by way of example only and with reference to certain figures, wherein:
Fig. 1 is a schematic cross-sectional end elevation view of an exemplary embodiment of electrical machine, showing a field excitation winding arranged in a rotor opposite a stator;
Fig. 2 is a schematic cross-sectional view of a portion of a pole shoe of the electrical machine of Fig. 1, showing a field excitation winding;
Fig. 3 a schematic of the field excitation winding of the electrical machine of Fig. 1, showing the electrical connectivity of the winding to a current source;
Fig. 4 is a schematic view of the electrical machine of Fig. 1, showing the excitation system of the electrical machine; and
Figs. 5 - 7 are schematic cross-sectional end views of a portion of the electrical machine of Fig. 1, Fig. 5 showing the magnetic flux of the electrical machine with no current applied to the field excitation windings, Fig. 6 showing a current applied to the windings to weaken (de-intensifies) the permanent magnet flux, and Fig. 7 showing a current applied to the magnify (intensify) the permanent magnet flux, respectively.

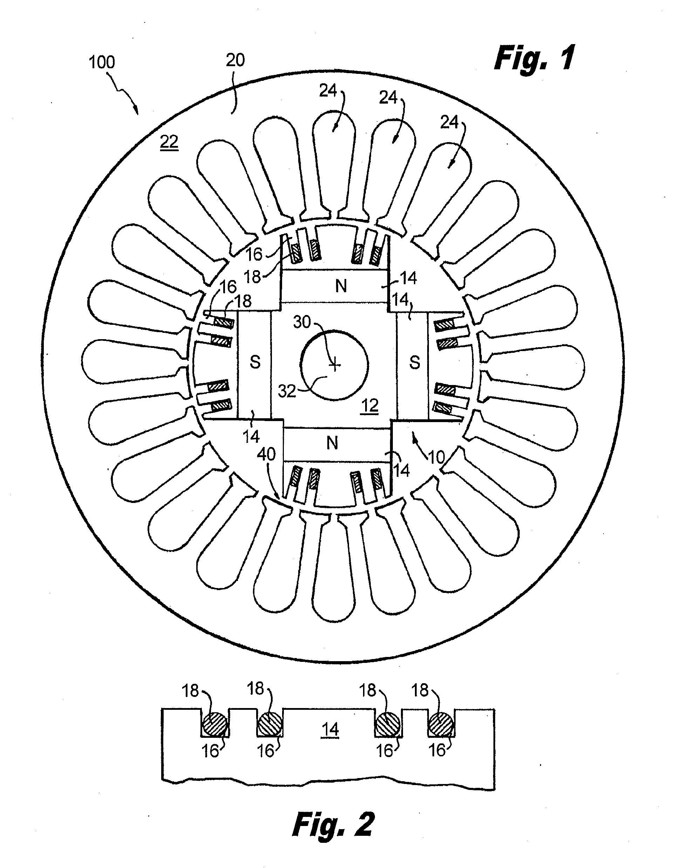

Reference will now be made to the drawings wherein like reference numerals identify similar structural features or aspects of the subject invention. For purposes of explanation and illustration, and not limitation, a partial view of an exemplary embodiment of the permanent magnet synchronous machine in accordance with the invention is shown in Fig. 1 and is designated generally by reference character 100. Other embodiments of the permanent magnet synchronous machine in accordance with the invention, or aspects thereof, are provided in Figs. 2 - 7, as will be described. The system of the invention can be used for land vehicles including combustion engine vehicles, electric vehicles and hybrid electric vehicles, aircraft main and auxiliary power unit (APU) generators, and renewable electric energy systems such as micro turbines, wind, and hydro generators. As will be appreciated, other applications are also possible.

Referring now to Fig. 1, stator and rotor portions of electrical machine 100 are shown. Electrical machine 100 includes a shaft 32 defining an axis of rotation 30. Rotor portion 10 is disposed about shaft 32 and extends coaxially along axis 30. Stator portion 20 circumferentially disposed about rotor 10 and also extends coaxially along axis 30. An outer surface of rotor 10 opposes an inners surface of stator 20, the opposed surfaces defining a circumferential gap 40. The width of gap 40 is determined by radial offset between stator 20 and rotor 10, and in conjunction with the diameters of the rotor and stator influences the compactness of rotor/stator assembly and size of electrical machine 100. As will be appreciated, embodiments of electrical machine 100 can have rotor 10 disposed radially outward from stator 20 and remain within the scope of invention described herein.

Rotor 10 has rotor core 12 and a plurality of permanent magnet components 14 arranged about its periphery. In the illustrated embodiment, rotor core 12 is disposed radially inward from permanent magnet components 14 and stator 20. Permanent magnet components 14 are coupled to rotor core 12 and define respective north/south poles on opposing ends as indicted in Fig. 1. Permanent magnet components 14 also define respective pole shoe portions disposed between the magnet pole and gap 40, each pole shoe portion having a plurality of pole shoe slots 16. Pole shoe slots 16 extend radially inward from gap 40 into the surface of the respective pole shoes, and are disposed circumferentially about the periphery of rotor core 12. At least one field excitation winding 18 is disposed within the pole shoe slots 16 of a pole shoe of permanent magnet components 14. In the illustrated embodiment, rotor core 12 has an inner and an outer field winding disposed within each of permanent magnet components 14. As will be appreciated, embodiments of electrical machine 100 can a smaller or greater number of field excitation windings disposed within corresponding pole shoe slots in order to provide suitable magnetic field flux regulation in a given application.

With continued reference to Fig. 1, stator 20 includes a stator core 22 and a plurality of AC armature windings 24. Armature windings 24 are disposed within respective slots defined within stator core 22, and are radially spaced apart from winding armatures 24 by gap 40. Armature windings 24 radially oppose permanent magnet components 14 as the permanent magnet components rotate about axis 30, each generating electric current (in generate mode) as permanent magnet components 14 successively pass the armature winding or respectively applying an electromotive force on permanent magnet components 14 as they pass from current flowing through the winding armature. In an embodiment, stator 20 is a three-phase AC stator.

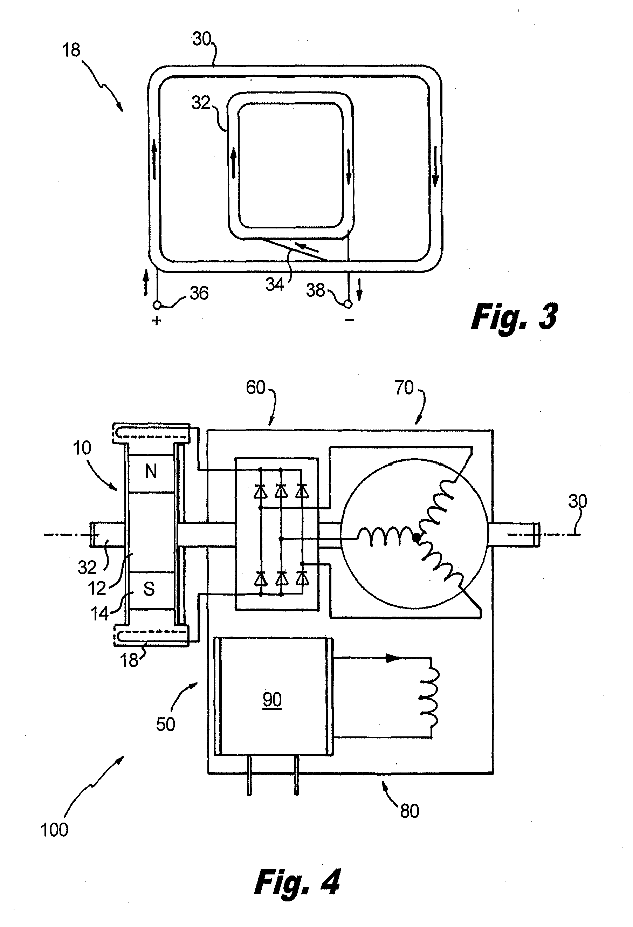

Referring to Fig. 2, a cross-section of a pole shoe portion of permanent magnet component 14 is shown. Permanent magnet component 14 defines pole shoe with a plurality of pole shoe slots 16. In the illustrated embodiment, permanent magnet component 14 defines pole shoe slots 16 respectively housing an inner DC field winding 32 and an outer DC field winding 30 (shown in Fig. 3). Pole shoe slots 16 each house respective winding segment portions, Fig. 2 showing four pole shoe slots 16 containing portions of two field excitation windings 18. As will be appreciated, any suitable number of field excitation windings and pole shoe slots may be used as may be suitable for a given application. It is also contemplated that a given pole show slot may house more than one field excitation winding segment.

Referring now to Fig. 3, field excitation winding 18 is shown looking radially inward at a pole shoe of permanent magnet component 14. Field excitation winding 18 includes first and second conductive paths 30 and 32. The outer conductive path 30 is electrically connected to a positive DC (source) terminal 36 on one end, and is connected in series to inner conductive path 32 on a second end by a conductive path 34. Inner conductive path 32 in turn connects to negative (return) terminal 38. As illustrated by current flow arrows in Fig. 3, DC current flows from source terminal 36 to return terminal 38 serially through outer conductive path 30 and then through inner conductive path 32. Current flowing through conductive paths 30 and 32 of field windings 18 create magnetic field flux in the pole shoe housing the windings, thereby regulating the magnetic field flux of permanent magnet component 14 housing windings 18. As would be appreciated, field excitation windings 18 can optionally be placed in parallel with one another.

Operatively, each permanent magnet component 14 generates a persistent magnetic field of constant magnetic flux at its respective pole. Field excitation windings 18 generate a magnetic field of variable magnetic flux. The variable magnetic field flux generated by windings 18 is determined by the amount of current flowing through the conductive paths 30 and 32 of field excitation windings 18. At each pole shoe, the persistent magnetic field flux of the permanent magnet and the variable magnetic field flux of the field windings cooperate to form an effective magnetic field flux. When voltage across terminals 36 and 38 is zero no current flows through field excitation winding 18, and the effective flux of permanent magnet component 14 corresponds to the constant field flux of the persistent magnetic field of permanent magnet component 14. When a positive voltage is applied at terminal 36 (as shown in Fig. 3), current flows through field excitation windings 18 and a variable field flux is generated that is a function of the applied voltage. When polarity is reversed, and the positive voltage is applied at terminal 38, current flows in the opposite direction through field excitation windings 18 and a variable field flux of opposite polarity is generated. As will be appreciated, the polarity of the applied voltage determines whether the generated variable field flux intensifies or de-intensifies the constant field flux of permanent magnet component 14. As will further be appreciated, altering the magnitude of the voltage changes the extent to which the variable field flux intensifies or de-intensifies the constant field flux of permanent magnet component 14. The voltage applied to field excitation windings 18 thereby becomes the knob by which magnetic flux in electrical machine 100 is regulated, i.e. intensified and de-intensified.

Referring now to Fig. 4, an excitation system 50 of electrical machine 100 is shown. In the illustrated embodiment, electrical machine 100 includes shaft 32 which defines rotation axis 30. Rotor 10 is mounted to shaft 32, and has rotor 12 and permanent magnet components 14 disposed thereon. Permanent magnet components 14 define pole shoe slots 16 (shown in Fig. 1) into which field excitation windings 18 are disposed. Electrical machine 100 is also illustrated with stator 20 removed for purposes of clarity. As will be appreciated, shaft 32 may be coupled to a prime mover, such as an aircraft main or APU engine for example.

Excitation system 50 includes a rotating rectifier 60, a rotating exciter portion 70, a fixed exciter portion 80, and a DC controller 90. Rotating rectifier 60 and rotating exciter portion 70 are coupled with rotor 10 on shaft 32, and synchronously rotate together as an assembly. Fixed exciter portion 80 and a DC controller 90 are fixed with respect to shaft 32 and elements coupled thereto. DC controller 90 is electrically connected to fixed exciter portion 80, and is configured and adapted to generate an electromagnetic field about a coil of fixed exciter portion 80. Fixed exciter portion 80 is electromagnetically coupled rotating exciter portion 70 such that a set of wire coils successively pass into and out of the field generated by fixed exciter portion 80 as rotating exciter portion 70 rotates. The wire coils are electrically connected on an end to rotating rectifier 60, and collectively generate AC current which is supplied to rotating rectifier 60. Rotating rectifier 60 includes a diode bridge that, on one end receives an AC current from the rotating exciter portion 70, and on it other end it supplies DC current. Exciter 50 is a brushless exciter. As will be appreciated, embodiments of electrical machine 100 can include a solid state rectifier with slip rings and brushes.

Operatively, DC controller 90 is configured and arranged to supply and vary a DC current flowing through fixed exciter portion 80. Supplying DC current to fixed exciter portion 80 creates a magnetic field that induces alternating (AC) current in rotating exciter portion 70. Varying the supplied DC current changes the created magnetic field so as to vary the AC current in rotating exciter portion 70. The AC current induced in rotating exciter portion 70 is converted to DC current by rotating rectifier 60, such as by operation of a plurality of diodes for example. Rotating rectifier 60 supplies the DC current to the field excitation windings 18 disposed in pole shoe slots 16 of rotor 10. As would be appreciated, controlling the DC current supplied to fixed exciter portion influences the magnetic field modulation effected by the field excitation windings in rotor 10. Controlling can be done turning the DC current on and off, for example.

The DC voltage may be increased, decreased, or its polarity reversed, thereby inducing corresponding, e.g. offsetting or additive, variable magnetic flux from the field excitation windings. As would further be appreciated, DC controller 90 may further include a processor communicative with a non-transitory machine readable media with instructions recorded thereon that, when read by the processor, cause the DC controller to vary the DC current to control torque generated by the electrical machine 100 during start-up mode and/or voltage during generator mode.

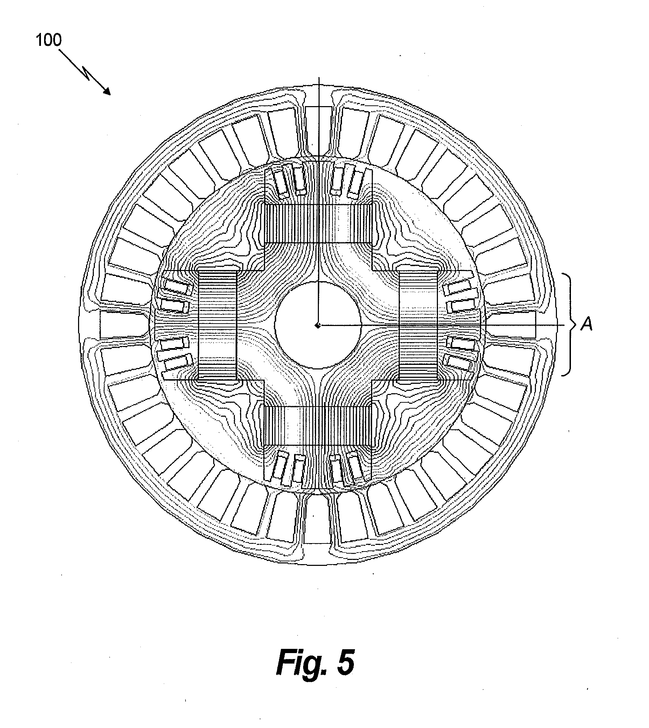

With reference to Figs. 5 - 7, magnetic flux distributions in the cross-section of electrical machine 100 are shown. Fig. 5 shows a first magnetic flux distribution having a baseline level regulation of field excitation in a stator region A radially opposite the pole shoe of magnet 14. Substantially no current flows through the field excitation windings 18, and no corresponding field excitation winding flux is generated to weaken or strengthen the permanent magnet flux. The illustrated flux distribution is the result of the persistent magnetic flux generated by the permanent magnet components 14 mounted on the rotor 12.

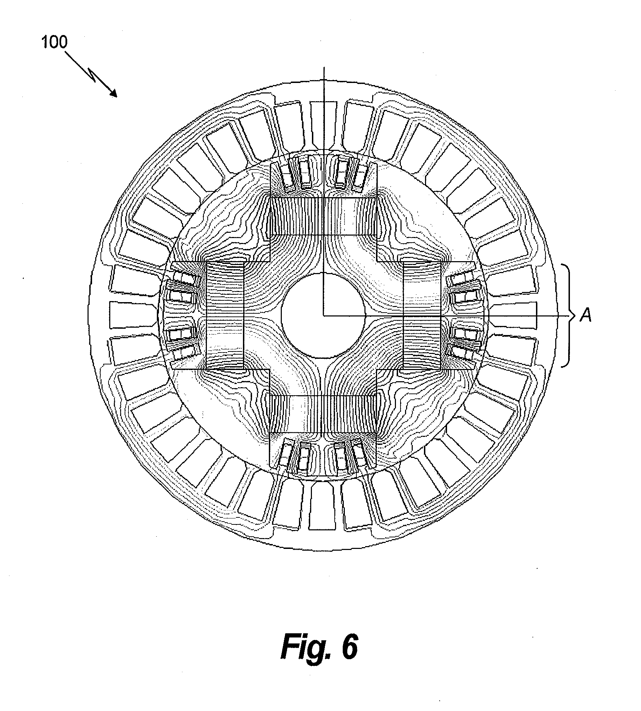

Fig. 6 shows a second, weakened (de-intensified) level of aggregate magnetic flux distribution within electrical machine 100 in stator region A radially opposite the pole shoe of magnet 14. The aggregate flux includes the persistent magnetic flux of the permanent magnet components 14 and an offsetting variable magnetic flux resulting from DC current flowing through the field excitation windings 18 in a first direction. The offsetting variable flux de-intensifies (weakens) the magnetic flux produced by permanent magnet components 14, illustrated in Fig. 6 by magnetic field lines both fewer in number and with larger separation than those illustrated in Fig. 5. The second magnetic flux distribution is less than the first magnetic flux distribution, and encompasses a smaller portion of stator 20 in region A as illustrated by the reduced number of flux lines between the AC armature windings opposite the pole shoe in region A.

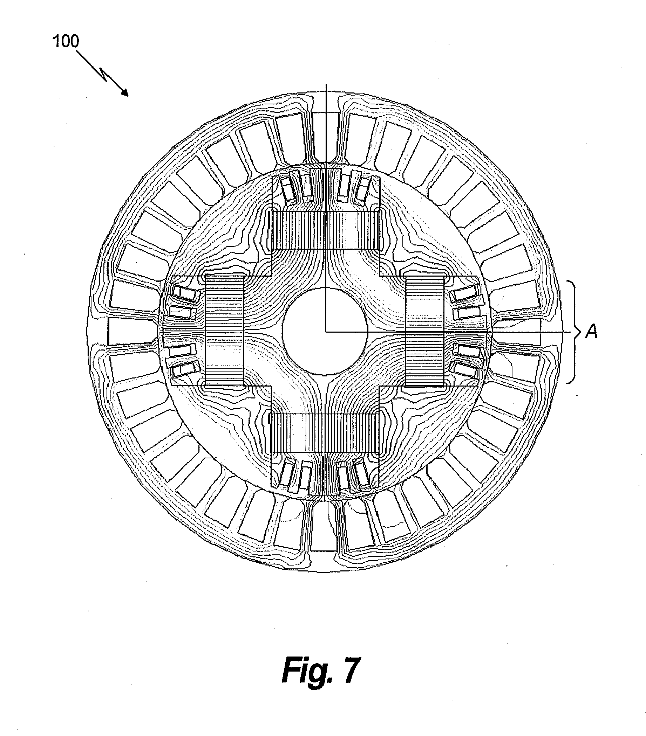

Fig. 7 shows a third, strengthened (intensified) level of aggregate magnetic flux distribution within electrical machine 100 in stator region A radially opposite the pole shoe of magnet 14. The aggregate flux includes the persistent magnetic flux of the permanent magnet components 14 and an additive variable magnetic flux resulting from DC current flowing through the field excitation windings 18 in a second direction. The additive variable flux intensifies (strengthens) the magnetic flux produced by permanent magnetic components 14, illustrated in Fig. 7 by magnetic field lines both greater in number having smaller separation in comparison to those shown in Fig. 5. The third magnetic flux distribution is greater than the first magnetic flux distribution, and encompasses a greater portion of stator 20 in region A as illustrated by an increased number of flux lines between the AC armature windings opposite the pole shoe in region A than illustrated in Fig. 5.

Operatively, when the field excitation windings are supplied with DC current, the rotor field winding flux can more readily reduce or magnify the magnetic flux of the permanent magnets depending on the direction of the current applied to the field excitation windings. This allows for regulating magnetic flux within the machine by either weakening or strengthening the magnetic field, controlling output voltage when the machine is in generator mode and controlling torque when the machine is control in start-up mode. Embodiments of electrical machine 100 provide better effect of flux weakening and magnification, and therefore provide voltage or toque control. Embodiments of electrical machine 100 are also relatively compact because the field excitation windings are positioned within the rotor permanent magnets, and not on either of the inner stator surface or rotor outer surface. For this same reason, embodiments of electrical machine 100 also require less copper in the rotor field winding, and have relatively high power density. They can also be easier to manufacture and provide more space for permanent magnets.

The methods and systems, as described above and shown in the drawings, provide an electrical machine with superior properties including control of the magnet flux between the electrical machine rotor permanent magnets and winding armatures. While the apparatus and methods of the subject invention have been shown and described with reference to preferred embodiments, those skilled in the art will readily appreciate that changes and/or modifications may be made thereto without departing from the scope of the subject invention, which is defined by the claims.

The following clauses set out features of the invention which may not presently be claimed in this application but which may form the basis for future amendment or a divisional application.
1. An electrical machine comprising:
   a permanent magnet component radially spaced apart from a winding armature; and
   a field excitation winding operatively connected to the permanent magnet component to selectively intensify and de-intensify a magnetic field of the permanent magnet component for control of magnetic flux in the electrical machine.
2. An electrical machine as recited in clause 1, wherein the permanent magnet component defines pole shoe slots housing the field excitation winding.
3. An electrical machine as recited in clause 1, wherein the permanent magnet component is a rotor, wherein the winding armature is a stator separated from the rotor by a radial gap, and wherein the permanent magnet component defines pole shoe slots housing the field excitation winding.
4. An electrical machine as recited in clause 3, wherein the slots housing the field excitation winding are proximate the radial gap.
5. An electrical machine as recited in clause 3 or 4, wherein the rotor is a rotor core radially inward of the stator, wherein the rotor core includes embedded permanent magnets.
6. An electrical machine as recited in clause 3, 4 or 5, wherein the stator is a three-phase stator with slots housing respective AC windings.
7. An electrical machine comprising:
   a permanent magnet component radially spaced apart from a winding armature, wherein the permanent magnet component includes a plurality of magnetic poles each with a respective embedded permanent magnet; and
   a plurality of field excitation windings, wherein a respective field excitation winding is housed in a respective pole shoe slot of the permanent magnet component to selectively intensify and de-intensify a magnetic field of the permanent magnets for control of magnetic flux in the electrical machine.
8. An electrical machine as recited in clause 7, wherein the field excitation windings are connected together in series.
9. An electrical machine as recited in clause 7, wherein the field excitation windings are connected together in parallel.
10. An electrical machine as recited in clause 7, 8 or 9, wherein the permanent magnet component is a rotor, wherein the winding armature is a stator separated from the rotor by a radial gap, and wherein the pole shoe slots housing the field excitation windings are proximate the radial gap.
11. An electrical machine as recited in clause 10, wherein the rotor is a rotor core radially inward of the stator.
12. An electrical machine as recited in clause 10, wherein the stator is a three-phase stator with slots housing respective AC windings.

## Claims

1. An electrical machine (100) comprising:
a permanent magnet component (10) radially spaced apart from a winding armature (20); and
a field excitation winding (18) operatively connected to the permanent magnet component to selectively intensify and de-intensify a magnetic field of the permanent magnet component for control of magnetic flux in the electrical machine.

2. An electrical machine as recited in claim 1, wherein the permanent magnet component defines pole shoe slots (16) housing the field excitation winding.

3. An electrical machine as recited in claim 2, wherein the permanent magnet component is a rotor (10), wherein the winding armature is a stator (20) separated from the rotor by a radial gap (40).

4. An electrical machine as recited in claim 3, wherein the slots housing the field excitation winding are proximate the radial gap.

5. An electrical machine as recited in claim 3 or 4, wherein the rotor is a rotor core (12) radially inward of the stator, wherein the rotor core includes embedded permanent magnets (14).

6. An electrical machine as recited in claim 3, 4 or 5 wherein the stator is a three-phase stator with slots housing respective AC windings.

7. An electrical machine as recited in claim 1,
wherein the permanent magnet component includes a plurality of magnetic poles each with a respective embedded permanent magnet (14); and
wherein the field excitation winding is one of a plurality of field excitation windings, wherein a respective field excitation winding is housed in a respective pole shoe slot of the permanent magnet component to selectively intensify and de-intensify a magnetic field of the permanent magnets for control of magnetic flux in the electrical machine.

8. An electrical machine as recited in claim 7, wherein the field excitation windings are connected together in series.

9. An electrical machine as recited in claim 7, wherein the field excitation windings are connected together in parallel.

10. An electrical machine as recited in claim 7, 8 or 9, wherein the permanent magnet component is a rotor, wherein the winding armature is a stator separated from the rotor by a radial gap (40), and wherein the pole shoe slots housing the field excitation windings are proximate the radial gap.

11. An electrical machine as recited in claim 10, wherein the rotor is a rotor core radially inward of the stator.

12. An electrical machine as recited in claim 10 or 11, wherein the stator is a three-phase stator with slots housing respective AC windings.
